# EUROPEAN PATENT SPECIFICATION

(11) **EP 3 641 349 B1**
(45) Date of publication and mention of the grant of the patent: **09.02.2022**
(21) Application number: 18382740.1
(22) Date of filing: 17.10.2018
(51) Int. Cl.: H04W 4/021, H04L 29/08, H04W 12/02

(54) **METHOD, SYSTEM AND COMPUTER PROGRAMS FOR PROVIDING A LOCATION AWARE USER MODEL PRESERVING THE USER'S PRIVACY**
VERFAHREN, SYSTEM UND COMPUTERPROGRAMME ZUR BEREITSTELLUNG EINES ORTSBEWUSSTEN BENUTZERMODELLS MIT AUFRECHTERHALTUNG DER PRIVATSPHÄRE DES BENUTZERS
PROCÉDÉ, SYSTÈME ET PROGRAMMES INFORMATIQUES PERMETTANT DE FOURNIR UN MODÈLE UTILISATEUR INFORMÉ DE LA LOCALISATION POUR PRÉSERVER LA CONFIDENTIALITÉ DE L'UTILISATEUR

(43) Date of publication of application: 22.04.2020
(73) Proprietor: Koa Health B.V., 1097 JV, Amsterdam (NL)
(72) Inventor: Lantz, Johan, 28013 Madrid (ES); Matic, Aleksandar, 28013 Madrid (ES)
(74) Representative: Carlos Hernando, Borja

(56) References cited:
- WO-A1-2015/082003
- US-A1- 2015 219 466
- Sibren Isaacman ET AL: "Identifying Important Places in People's Lives from Cellular Network Data" In: "Image Analysis and Recognition : 11th International Conference, ICIAR 2014, Vilamoura, Portugal, October 22-24, 2014, Proceedings, Part I; IN: Lecture notes in computer science , ISSN 1611-3349 ; Vol. 8814", 1 January 2011 (2011-01-01), Springer, Berlin, Heidelberg 032548, XP55322487, ISBN: 978-3-642-17318-9 vol. 6696, pages 133-151, DOI: 10.1007/978-3-642-21726-5_9, * abstract * * page 133, line 3 - line 14 * * page 134, line 1 - line 10 * * page 134, line 10 * * page 134, line 21 - line 26 * * page 134, line 36 - line 43 * * page 135, line 25 * * page 135, line 36 - line 43 * * page 136, line 31 - line 39 * * page 137, line 24 - line 42 * * page 138 - page 141; figures 1,2 * * page 143 - page 144 *

## Description

### Technical Field

This invention relates to a method, and corresponding system and computer programs, for ensuring user privacy for sensor data collected from a mobile computing device such as a smartphone.

### Background of the Invention

Collecting large amounts of data from personal computing devices and moreover acquiring rich information about individuals naturally comes with the risk of invading the person's privacy. Regardless of the fact that the user agrees with the consent that explains in details the data that is being collected and the intended use, GDPR strongly encourages data minimization and more importantly it prohibits the collection of data that is not required to deliver the service. Being able to obtain the same results and/or modelling accuracy with less data is hugely beneficial for any data-dependent service as it decreases the risk to expose personal information while boosting user's trust and the perception of control.

There are known some APPS that take the advantage of phone sensors to deliver or improve their services, thus they often rely on privacy sensitive data. One common feature is geofencing where APPS can interact with the physical world to improve engagement and timeliness of interaction with a user.

Sibren Isaacman ET AL, in "Identifying Important Places in People's Lives from Cellular Network Data"In: "Image Analysis and Recognition : 11th International Conference, ICIAR 2014, Vilamoura, Portugal, October 22-24, 2014, Proceedings, Part I; IN: Lecture notes in computer science , ISSN 1611-3349 ; Vol. 8814", 1 January 201, disclose a technique to identify important personal places and movement patterns based on cellular network data (in particular, Call Data Records), the cellualr network data is analysed in an anonymized way.

New techniques/solutions are therefore needed to process personal information in a more anonymous way, so the information can be shared with backend services capable of building advanced user models and apply machine learning algorithms but without the risk of exposing information that could uniquely identify the user(s).

### Description of the Invention

The invention is defined by independent method claim 1, independent system claim 6 and independent non-transitory computer-readable medium claim 7. Further details are defined in the dependent claims.

According to the proposed method, the heatspots include different areas of different significance for the user. The heatspots have a given radius, equal or different among them, that can range from a few meters to several kilometers.

The sensor capture module may reside in the platform layer of the application meaning that there is a separate version for iOS^{™} and Android^{™}. Nonetheless, the concept is not limited to a specific platform and similar features could be available on other mobile platforms, embedded systems (loT) or even web browsers.

In an embodiment, the processing of the collected sensor data further comprises providing at least one timestamp to each heatspot indicating the moment of time the user reached the heatspot.

In an embodiment, each unique identifier is encrypted based at least on a part of the location coordinates of the predetermined area.

Therefore, present invention allows for reaching an optimal trade-off between the user modeling power and the level of data sensitivity. Moreover, present invention increases user trust and decreases risk in case of data breaches. Besides, higher compliance with data regulations is achieved.

### Brief Description of the Drawings

The previous and other advantages and features will be more fully understood from the following detailed description of embodiments, with reference to the attached figures, which must be considered in an illustrative and non-limiting manner, in which:
Fig. 1 graphically depicts a simple heatspot model used by the proposed invention.
Fig. 2 is a simplified visualization of how different heatspots are connected to each other. The transition from 2-4 indicates a missed location sample in a regular interval.

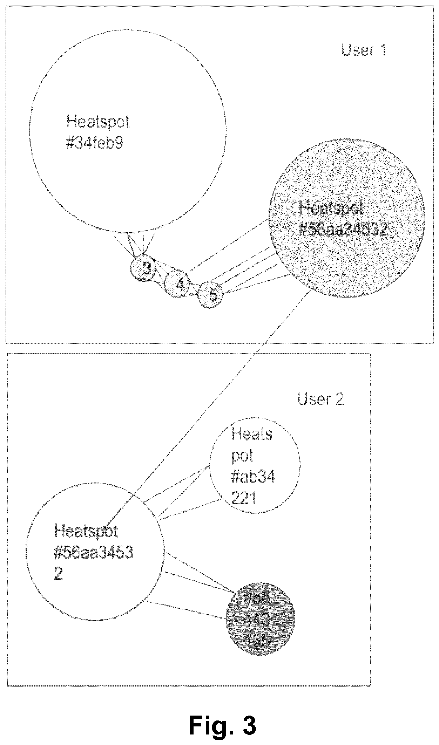

Fig. 3 graphically depicts an example in which both User 1 and User 2 spends a significant amount of time in anonymized heatspot #56aa34532.
Fig. 4 is a flow chart illustrating the general flow from device detection to recommendation via analysis.
Fig. 5 is an illustration of how the same device generates two different identifiers when reported to the computer/server.
Fig. 6 is an illustration in which in User A and B reports User C to the server but only the manufacturer identifier is preserved.
Fig. 7 is an illustration of how User A and User B would both report the same, anonymized identifier for User C.
Fig. 8 illustrates how User B's privacy settings eliminate User A from the devices reported for analysis since it is outside of the predefined range.

### Detailed Description of Preferred Embodiments

Present invention focuses on privacy preservation while still allowing for the sensor data collection and user modelling. The descriptions below focus on sensor data that can potentially expose private information and how that can be anonymized without losing the ability to process the data in a personalized way.

The aim of the present invention is to build a good user model that can be 100% anonymous using data that anonymized while still being equally or close to equally relevant as its non-privacy invasive counterpart.

Continuously uploading location information for a user exposes a lot of personal information; on the other hand it provides a rich insight into the users' daily activities. In order to reduce the exposure risk and preserve user privacy present invention proposes a concept called the 'heatspot' (i.e. areas of different significance for the user). The heatspot works in such a way that for each location obtained from the user's mobile computing device it compares it to a list of locally cached areas within a certain radius and if there is a previous match the number of "hits" in that area is increased. The benefit of this is that it does not require continuous monitoring; on the contrary by obtaining a location at regular or fairly regular intervals the reliability of the heatspot importance is improved.

As an example, User A spends most his time at home or at work and has a 30 minute commute in between. A simplified day in User A's life looks like this:
07:00 Wake up
08:00 Leave for work
08:30 Arrive at work
17:00 Leave work
17:30 Arrive home
23:00 Go to bed

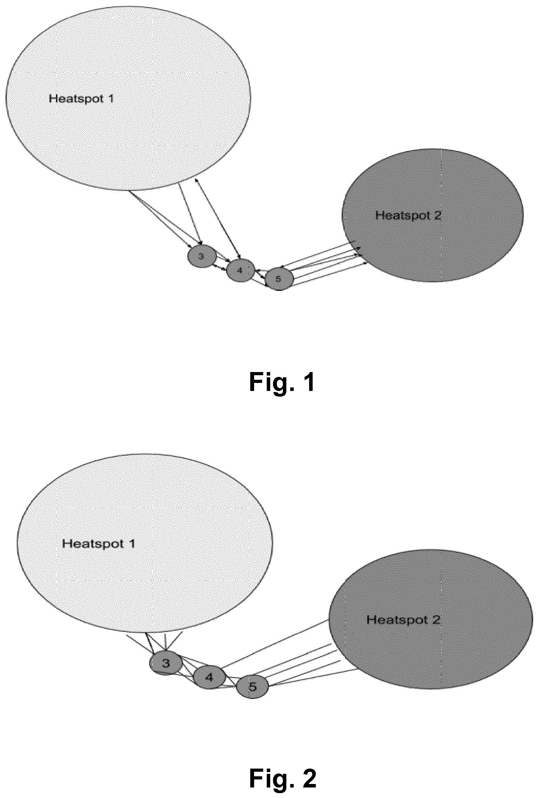

With an approach that continuously monitors User A's exact location his exact whereabouts over time would be tracked and persisted in the backend. However, if the sensor capture module before uploading the data for processing uses a heatspot approach, User A's activities would be grouped into areas of different significance (see Figs. 1 and/or 2).

Now a machine learning algorithm can quite easily detect a pattern from this simplified case, labeling Heatspot 1 as User A's Home, heatspot 2 as User A's workplace and Heatspots 3-5 and intermediate points such as commuting.

Moreover, in an embodiment, if the heatspot identifier is reported in combination with a timestamp the granularity is further improved since it will allow transition monitoring between heatspots allowing user flows to be simulated without exposing location details.

Depending on the embodiment more or less precision might be required/desired and with the heatspot model the user can be in control of this. This is accomplished by exposing an option on application or user level that controls the size of the heatspot.

If fine precision is needed, for instance for a mental wellness APP that needs to know if the user is leaving home at all, the heatspot radius must be relatively low to be able to determine if the user is at home or in another heatspot. For a more generic purpose, it might be sufficient to have a larger heatspot radius for instance if it needs to be detected if the user is travelling for work or spend weekends away without exposing to where, then a heatspot the size of a city would be more than sufficient. In both cases the exact location is never compromised but having the option to tune the granularity might offer more peace of mind for the user.

In an embodiment, the heatspot is simply labeled or identified with an identifier that is specific for each user, i.e. users A, B and C will all have Heatspots 0, 1, 2 and so on.

In another embodiment, the identifier is further encrypted based at least on a part of the location coordinates of the predetermined area. In this case, the computer would be able to correlate behaviors, movements etc. between users active in the same heatspots. It could also be used to conclude if users spending a lot of time in similar areas also share similar behaviors, problems etc.

For many services, developing behavioral models is highly dependent on establishing statistical relationships among different users, which therefore requires mapping between their collected data points, such as location. However, this is impossible if different users have different heatspot annotations. In order to allow for that while still fully preserving the users' privacy, in an embodiment, the computer randomly creates a seed for creating a salt key. Then, the computer automatically creates the random salt key (with a pre-defined number of characters), encrypts it and stores it for the future use. The computer also decides on a hashing technique to be used to obfuscate the locations, e.g. SHA-256 (note that the computer can change a hashing technique over time to use the latest one), and communicates to the mobile computing device of the user the hashing technique and the encrypted salt key (this transfer can be performed in the same way that server and client side exchange the password, without any of the sides storing the raw value). Finally, the mobile computing device applies the hashing technique with the salt key to every location and sends only a hash to the computer.

Different computers will have its own salt key; therefore even if the same hashing function is accidentally used and the two computers communicate to each other they cannot map their users. This is extremely important because crossing two different data sets can endanger user privacy in unpredictable ways, and location if uniquely hashed can serve as a key to identify users.

### Therapy application:

In an embodiment, in particular for a company developing a therapy application, the application comprises several parts: an interactive therapy program designed to address the symptoms, a chat with the therapist or an anonymous support group, and other features. Now while the user may follow the program at certain pace or interact with the therapist or support group on random occasions, these are all user initiated actions. There is also a need for preventive measures and detecting anomalies in the user movement patterns as a good indicator that something might be wrong.

In the case of User A having a condition that makes it incredibly hard to leave home due to for example anxiety, depression or bad self-image it would be very valuable for the treatment application to proactively detect behavior that could be potentially harmful. However tracking the user's location and action on a detailed level will be extremely privacy invasive and would pose great challenges on the security of the backend storage (or computer's storage). On the other hand if the user is tracked based on anonymous heatspots and the algorithms in the backend (i.e. in the computer) have learned where is the home heatspot then it can easily detect if the user has not left that comfort zone for X days and in this case notify either the GP or the support group.

As a first step the application can query the user about the current perceived health state, then recommend the user to take a walk and finally "alert" the peers about a potentially unhealthy situation. In no case would this expose the user's exact whereabouts.

As an example, the APP can provide a service for detecting early signs that a user is going to experience a mental health crisis (such as depression, mania, or similar). The literature showed that mobility patterns are important predictors of the upcoming crises. However, using raw locations is considered to be extremely privacy invasive, and in particular patients do not feel comfortable to share it. From the service side, storing raw locations poses additional requirements, for instance GDRP imposes "high" security measures that are extremely challenging to comply to particularly for smaller companies (such as physical security, logging not only electronic access to the server but authenticating people who are in physical vicinity of the server and granting special permissions, etc.).

Storing heatspots instead of raw locations eliminates the data security requirements, while still allowing for the models to incorporate the analysis of mobility patterns (e.g. knowing that a sequence of very specific locations is a predictor of the crisis, the algorithm can have the same accuracy with heatspots like in the case of raw locations).

### Geofencing services:

In another embodiment, if an APP delivers notifications to its users, the right timing is crucial for the engagement. Knowing in which heatspots its users are more responsive for specific time periods, the "right time" algorithm can work therefore without the need to store real locations.

In the same way, if some features of the APP rely on the proximity of its users (e.g. buying/selling items in the neighborhood); this function can work without the raw location data. Moreover, the concept of heatspots will support the case in which users set different granularity of location obfuscation (e.g. 100m versus 1km), while indicating the precision in the interface.

### Browser logs:

Having access to the Internet browsing logs of a user provides a deep insight into not only internet browsing habits but also the type of content consumed, user's preferences, and tastes. Expectedly, many studies showed that locations and internet history are the data categories with the highest privacy concerns.

Thus, in an embodiment, the very same concept of heatspots applies for the obfuscation of the internet logs, representing online whereabouts as opposed to locations that represent whereabouts in real life. In order to apply the invention in the same way to the locations, the granularity is defined in the following way (note that the granularity was defined based on distances in the location use case).

First, the following visibility levels of the internet logs are defined:
1) Timestamps of http(s) access (i.e. no any information about the requested domain).
2) Hashing only the domain name and sending it with the server (e.g. cnn.com shared as "ah13f;323f239tu2foiewewf", uniquely for the same service).
3) Hashing the address up to the second hash "/" and sharing the hash with the server (e.g. cnn.com/sport/ shared as "24otih3094tfe2fij42", uniquely for the same service).
4) Hashing address at the page level and sharing it with the server (e.g. "en.wikipedia.org/wiki/Josip_Broz_Tito"shared as "fuh8742hjas94ht2'[g", uniquely for the same service).
5) Hashing the name of the first level category that the visited website or a service belongs to (e.g. the first level category Alexa defines as: Adult, Arts, Business, Computers, Games, Health, Home, Kids and Teens, News, Recreation, Reference, Regional, Science, Shopping, Society, Sports, World).
6) Hashing the name of the second level category that the visited website or a service belongs to (e.g. for Science Alexa defines 29 second level categories including Academic Departments, Agriculture, Anomalie & Alternative Science, Astronomy, Biology, etc.)
7) Hashing the name of the third, fourth .... level category that the visited website or a service belongs to (the number of the category levels is related to the used dictionary).
8) Sharing a non-hashed name of the first category level that the visited website or a service belongs to.
9) Sharing a non-hashed name of the second category level that the visited website or a service belongs to.
10) Sharing a non-hashed name of the thirs category level that the visited website or a service belongs to ... etc.
11) Sharing a non-hashed domain name.
12) Sharing a non-hashed domain name up to the second hash "/".

Each next visibility level has one degree of a lower granularity from the previous one.

As an illustration, the above list is ordered from the lowest to the highest granularity with respect to the heatspot concept. However, variations in the above categories are allowed as long as they provide different levels of the URL visibility with the related partial or full obfuscation.

As it has been demonstrated here, https://arxiv.org/pdf/1710.00069.pdf different URL visibility levels indeed provide different user modelling predictive power (even only the timestamps can be sufficient for accurate user models).

### Bluetooth data:

The Bluetooth sensor is responsible for scanning the surroundings for Bluetooth or Bluetooth LE devices. This provides a way to detect which beacons that normally is available in the surroundings of the user. The most obvious example is a Bluetooth smartphone that would identify another individual but other devices such as smart speakers, TV's etc. could indicate incoming level and other interesting parameters that are valuable for the user modelling.

Collecting this data however may come with serious privacy concerns. For instance, there are adult items that have Bluetooth, and the Bluetooth identifier easily reveals the manufacturer. Moreover, having raw Bluetooth identifier can indirectly reveal extremely privacy sensitive information, e.g. which exactly device a user is the surrounding of at 2am during the weekends. It could however still be valuable for the model to know that this device is frequently or repeatedly present in the surroundings of the user. If used in a raw format, it is possible to reverse engineer if the identifier corresponds to a mobile phone (therefore a person) or to a specific device, TV, headphones, laptop, etc.

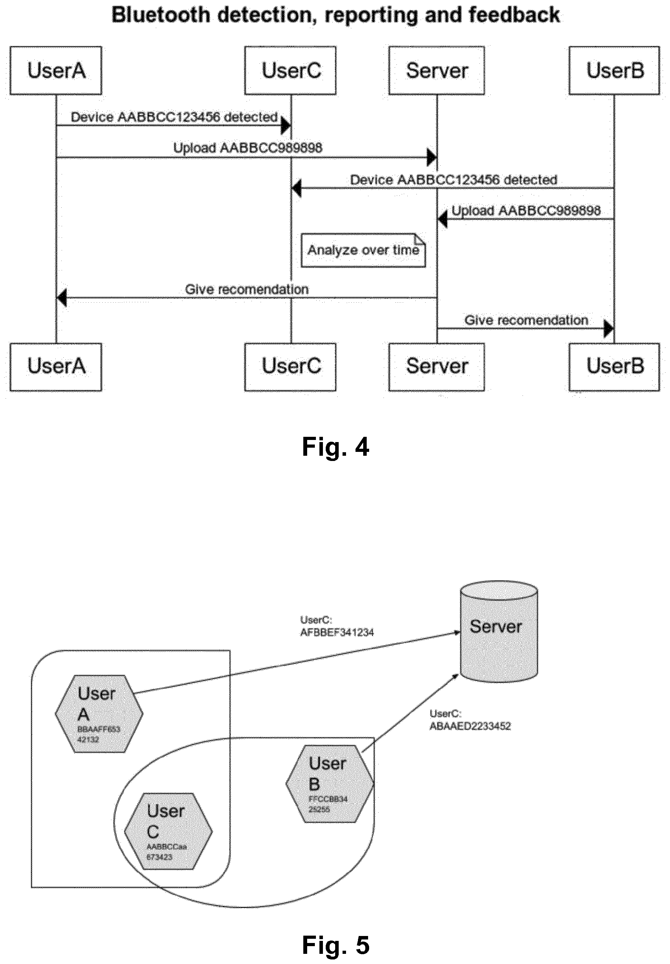

Therefore, for protecting user privacy, the exact Bluetooth address should not be shared with the backend for analysis, unless protected. The general flow from device detection to recommendation via analysis is described on Fig. 4.

### Strong local protection:

Each APP can generate a unique and persistent identifier id. This id will be used to hash/encrypt the remote Bluetooth device address. For example, Bluetooth address: AABBCCDDEEFF11 would be 45fe12aa673423. This means that even if User A and User B sees the same device, they will report different identifiers to the computer/server. Recognition can only be done for the same reporting device (seeing the same beacon twice will generate the same result).

Fig. 5 illustrates an example of how the same device generates two different identifiers when reported to the server.

### Strong local partial protection:

The first 3 bytes of a Bluetooth address identifies the manufacturer. By lowering the requirements slightly, the manufacturer could still be allowed to be identified while not exposing the device specific part of the address. For example, Bluetooth address: AABBCCDDEEFF11 would be AABBCCaa673423 (3 first bytes are preserved).

This allows detection of devices of the same brands and could potentially be tied into a position depending on other privacy settings but the actual unique device identifier is not exposed so there is no way to know if User A and B actually detected the same device when they saw User 3.

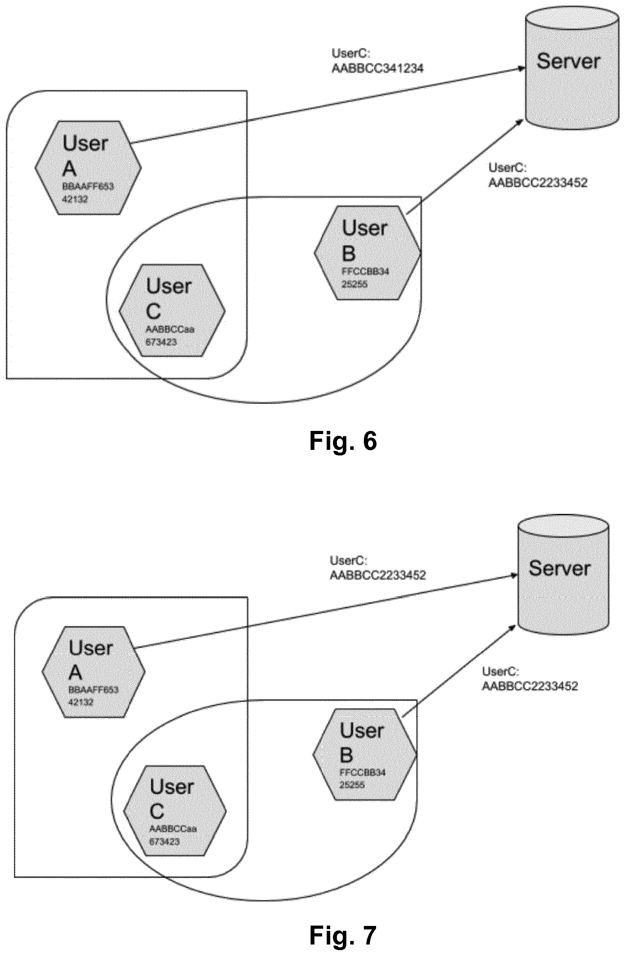

Fig. 6 illustrates an example in which User A and B reports User C to the server but only the manufacturer identifier is preserved.

### Distributed protection:

The examples above work but are only valid in the scope of one user. The alternative option is to privatize the personal information with a shared key or hash so that the result is always the same for the same device, regardless of which user encrypts it. This would allow for modelling of interactions between users and stationary beacons for different users of the same APP.

For example, User B has Bluetooth address: AABBCCDDEEFF11. When User A sees user B he will report AABBCCaa673423 to the backend. When User C sees user B he will also report: AABBCCaa673423. This way it can be deducted that User A and User C both interact with User B even though the exact details of User B's address is not shared.

Fig. 7 is an illustration of how User A and User B would both report the same, anonymized identifier for User C.

### Range restrictions:

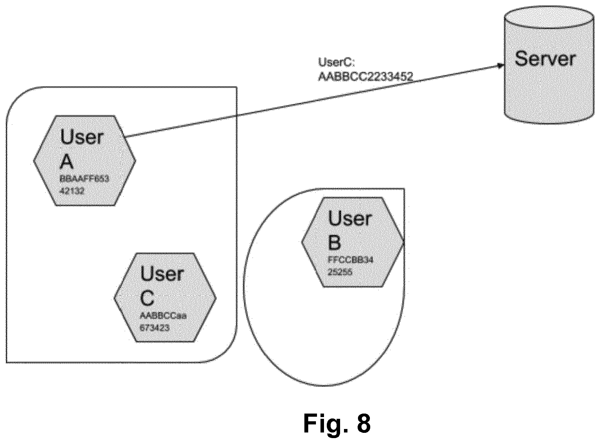

The maximum Bluetooth range (for v5.0) is around 120m. For users concerned about being associated with that remote device an increase in privacy would be to limit the reported devices to ones that are in a restricted range. This is controlled by verifying that the RSSI value measured from the remote beacon is higher than a certain threshold correlating to a privacy level setting chosen by the user. Fig. 8 illustrates how User B's privacy settings eliminate User A from the devices reported for analysis since it is outside of the predefined range.

Over time the reports received by the server, in any of the described embodiments, will allow computing a model of how the user interacts with other peers and devices. It will also allow the system to learn about random encounters vs repeated ones. Devices that are part of the home scenario vs work. In an extension, it can also be used to anonymously map circles of users to each other if they are all using the same platform. In contrast to other commercial and ad focused services, this is all done while preserving the privacy of both the user and the detected peers.

The embodiments described above are to be understood as a few illustrative examples of the present invention. In particular, different part solutions in the different embodiments can be combined in other configurations, where technically possible.

The scope of the present invention is defined in the following set of claims.

## Claims

1. Method for providing a location aware user model preserving the user's privacy, the method comprising:
a) collecting, by a sensor capture module, sensor data from a plurality of sensors installed on a mobile computing device of a user;
b) processing, by a computer, said collected sensor data in an anonymous way by grouping the collected sensor data into different heatspots, said heatspots including different areas of different significance for said user, and each of the heatspots comprising a given radius;
c) labeling, by the computer, each of the heatspots with a unique identifier corresponding to a predetermined area; and
d) generating, by the computer, a location aware user model based on said identifiers, so that said generated location aware user model is suitable for providing recommendations to the user via the mobile computing device, perform studies and/or provide an input to other user models,
wherein the method further comprises:
performing steps a)-d) for a plurality of different users active in the same heatspots, such that a location aware user model is generated for each one of the plurality of different users;
computing, by the computer, a seed and using said computed seed for automatically creating and encrypting a random salt key;
determining, by the computer, a hashing technique to be used to obfuscate the different heatspots, and transmitting to the mobile computing device of each user of said plurality of different users the encrypted random salt key and the determined hashing technique; and
applying, by each mobile computing device, the hashing technique with the salt key to every heatspot and transmitting a hash to the computer, and
wherein the collected sensor data includes one or more of the following: accelerometer data; activity data; data about installed applications in the computing device; data about a battery level of the computing device; data about Bluetooth beacons in the heatspot; call logs; data about de computing device including model and/or brand name; data indicating whether a headset is plugged in or not; Internet logs and/or surf history; current lux level; location data; whether music is playing or not; ambient noise level; pedometer data; network data about the computing device including roaming, operator, cell tower, data TX/RX, mobile/WiFi, airplane mode and/or country; data about places or type of establishments nearby the heatspot; data indicating whether a screen of the computing device is on/off; SMS logs; data indicating activity transitions of the user; and/or data indicating walking dynamics of the user.

2. The method of claim 1, wherein said step b) further comprises providing at least one timestamp to each heatspot indicating the moment of time the user reached the heatspot.

3. The method of previous claims, wherein each unique identifier is encrypted based at least on a part of the location coordinates of the predetermined area.

4. The method of previous claims, wherein the radius of the different heatspots are equal or different among them.

5. The method of previous claims, wherein the radius of the different heatspots range from a few meters to several kilometers.

6. System for providing a location aware user model preserving the user's privacy, comprising:
a plurality of mobile computing devices, each one belonging to a user of a plurality of different users;
a sensor capture module installed on each mobile computing device of the plurality of mobile computing devices to collect sensor data from a plurality of sensors installed on each mobile computing device, the collected sensor data including one or more of the following: accelerometer data; activity data; data about installed applications in the computing device; data about a battery level of the computing device; data about Bluetooth beacons in the heatspot; call logs; data about de computing device including model and/or brand name; data indicating whether a headset is plugged in or not; Internet logs and/or surf history; current lux level; location data; whether music is playing or not; ambient noise level; pedometer data; network data about the computing device including roaming, operator, cell tower, data TX/RX, mobile/WiFi, airplane mode and/or country; data about places or type of establishments nearby the heatspot; data indicating whether a screen of the computing device is on/off; SMS logs; data indicating activity transitions of the user; and/or data indicating walking dynamics of the user;
a computer including one or more processors and at least one memory, wherein the one or more processor are configured to:
process the collected sensor data of each user of the plurality of different users in an anonymous way by grouping the collected sensor data into different heatspots, said heatspots including different areas of different significance for the user, and each of the heatspots comprising a given radius;
label each heatspot with a unique identifier corresponding to a predetermined area;
generate a location aware user model per each user based on said identifiers, so that said generated location aware user model is suitable for providing recommendations to the user via the mobile computing device, perform studies and/or provide an input to other user models;
compute a seed and using the seed to automatically create and encrypt a random salt key; and
determine a hashing technique to be used to obfuscate the different heatspots, and transmit to the mobile computing device of each user of the plurality of different users the encrypted random salt key and the determined hashing technique, wherein each mobile computing device is further configured to apply the hashing technique with the salt key to every heatspot and to transmit a hash to the computer.

7. A non-transitory computer readable medium, comprising code instructions that when executed by a processor of a computer implement a method for providing a location aware user model preserving the user's privacy according to claim 1.

8. The non-transitory computer readable medium of claim 7, wherein the processor when processing the collected sensor data further provides at least one timestamp to each heatspot indicating the moment of time each user reached the heatspot.

## Patentansprüche

1. Verfahren zum Bereitstellen eines standortbewussten Benutzermodells, das die Privatsphäre des Benutzers bewahrt, wobei das Verfahren umfasst a) Sammeln, von einem Sensorerfassungsmodul, von Sensordaten von einer Vielzahl von Sensoren, die auf einer mobilen Rechenvorrichtung eines Benutzers installiert sind;
b) Verarbeiten, von einem Computer, der gesammelten Sensordaten auf anonyme Weise durch Gruppieren der gesammelten Sensordaten in verschiedene Heatspots, wobei die Heatspots verschiedene Bereiche mit unterschiedlicher Bedeutung für den Benutzer einschließen und jeder der Heatspots einen gegebenen Radius umfasst;
c) Kennzeichnen, von dem Computer, jedes der Heatspots mit einer eindeutigen Kennung, die einem vorbestimmten Bereich entspricht, und
d) Generieren, vom Computer, eines standortbewussten Benutzermodells basierend auf den Identifikatoren, so dass das generierte standortbewusste Benutzermodell geeignet ist, dem Benutzer über die mobile Rechenvorrichtung Empfehlungen zu geben, Studien durchzuführen und/oder anderen Benutzermodellen eine Eingabe bereitzustellen,
wobei das Verfahren ferner umfasst;
Durchführen der Schritte a) bis d) für eine Vielzahl von unterschiedlichen Benutzern, die in denselben Heatspots aktiv sind, sodass ein standortbewusstes Benutzermodell für jeden der Vielzahl von unterschiedlichen Benutzern generiert wird:
Berechnen, vom Computer, eines Seeds und Verwenden des berechneten Seeds zum automatischen Erstellen und Verschlüsseln eines zufälligen Salt-Schlüssels;
Bestimmen, vom Computer, einer Hashing-Technik, die verwendet werden soll, um die verschiedenen Heatspots zu verschleiern, und Übertragen des verschlüsselten zufälligen Salt-Schlüssels und der bestimmten Hashing-Technik an die mobile Rechenvorrichtung jedes Benutzers der Vielzahl von verschiedenen Benutzern; und
Anwenden, von jeder mobilen Rechenvorrichtung, der Hashing-Technik mit dem Salt-Schlüssel auf jeden Heatspot und Übertragen eines Hashs an den Computer, und wobei die gesammelten Sensordaten eines oder mehrere der Folgenden einschließen: Beschleunigungsmesserdaten; Aktivitätsdaten; Daten über installierte Anwendungen in der Rechenvorrichtung: Daten über einen Batteriestand der Rechenvorrichtung; Daten über Bluetooth-Beacons im Heatspot; Anrufprotokolle; Daten über die Rechenvorrichtung, einschließlich Modell- und/oder Markennamen; Daten, die angeben, ob ein Kopfhörer angeschlossen ist oder nicht: Internetprotokolle und/oder Surfverlauf; aktuelle Beleuchtungsstärke, Standortdaten, ob Musik abgespielt wird oder nicht, Umgebungsgeräuschpegel; Schrittzählerdaten: Netzwerkdaten über die Rechenvorrichtung einschließlich Roaming, Betreiber, Mobilfunkmast, Daten-TX/RX, Mobil/WiFi, Flugzeugmodus und/oder Land; Daten über Orte oder Art von Betrieben in der Nähe des Heatspots; Daten, die angeben, ob ein Bildschirm der Rechenvorrichtung an/aus ist; SMS-Protokolle; Daten, die Aktivitätsübergänge des Benutzers angeben; und/oder Daten, die die Gehdynamik des Benutzers angeben.

2. Verfahren nach Anspruch 1, wobei der Schritt b) ferner das Bereitstellen mindestens eines Zeitstempels für jeden Heatspot umfasst, der den Zeitpunkt angibt, zu dem der Benutzer den Heatspot erreicht hat.

3. Verfahren nach den vorstehenden Ansprüchen, wobei jede eindeutige Kennung basierend zumindest auf einem Teil der Standortkoordinaten des vorbestimmten Bereichs verschlüsselt wird.

4. Verfahren nach den vorstehenden Ansprüchen, wobei der Radius der unterschiedlichen Heatspots gleich oder unterschiedlich ist.

5. Verfahren nach den vorstehenden Ansprüchen, wobei der Radius der verschiedenen Heatspots von wenigen Metern bis zu mehreren Kilometern reicht.

6. System zum Bereitstellen eines standortbewussten Benutzermodells, das die Privatsphäre des Benutzers bewahrt, umfassend;
eine Vielzahl von mobilen Rechenvorrichtungen, von denen jedes einem Benutzer von einer Vielzahl verschiedener Benutzer gehört;
ein Sensorerfassungsmodul, das auf jeder mobilen Rechenvorrichtung der Vielzahl von mobilen Rechenvorrichtungen installiert ist, um Sensordaten von einer Vielzahl von Sensoren zu sammeln, die auf jeder mobilen Rechenvorrichtung installiert sind, wobei die gesammelten Sensordaten eines oder mehrere der folgenden einschließen: Beschleunigungsmesserdaten; Aktivitätsdaten; Daten über installierte Anwendungen auf der Rechenvorrichtung; Daten über einen Batteriestand der Rechenvorrichtung; Daten über Bluetooth-Beacons im Heatspot; Anrufprotokolle; Daten über die Rechenvorrichtung, einschließlich Modell- und/oder Markennamen; Daten, die angeben, ob ein Kopfhörer angeschlossen ist oder nicht; Internetprotokolle und/oder Surfverlauf, aktuelle Beleuchtungsstärke; Standortdaten; ob Musik abgespielt wird oder nicht; Umgebungsgeräuschpegel; Schrittzählerdaten; Netzwerkdaten über die Rechenvorrichtung einschließlich Roaming, Betreiber, Mobilfunkmast, Daten-TX/RX, Handy/WiFi, Flugmodus und/oder Land; Daten über Orte oder Art von Betrieben in der Nähe des Heatspots; Daten, die angeben, ob ein Bildschirm der Rechenvorrichtung an/aus ist; SMS-Protokolle; Daten, die Aktivitätsübergänge des Benutzers angeben; und/oder Daten, die die Gehdynamik des Benutzers angeben;
einen Computer, der einen oder mehrere Prozessoren und mindestens einen Speicher einschließt, wobei der eine oder die mehreren Prozessoren konfiguriert sind zum:
Verarbeiten der gesammelten Sensordaten jedes Benutzers der Vielzahl von verschiedenen Benutzern auf anonyme Weise, indem die gesammelten Sensordaten in verschiedene Heatspots gruppiert werden, wobei die Heatspots verschiedene Bereiche mit unterschiedlicher Bedeutung für den Benutzer einschließen und jeder der Heatspots einen gegebenen Radius umfasst:
Kennzeichnen jedes Heatspots mit einer eindeutigen Kennung, die einem vorbestimmten Bereich entspricht;
Generieren eines standortbewussten Benutzermodells für jeden Benutzer basierend auf den Identifikatoren, so dass das generierte standortbewusste Benutzermodell geeignet ist, dem Benutzer über die mobile Rechenvorrichtung Empfehlungen bereitzustellen, Durchführen von Studien und/oder Bereitstellen einer Eingabe an andere Benutzermodelle:
Berechnen eines Seeds und Verwenden des Seeds, um automatisch einen zufälligen Salt-Schlüssel zu erstellen und zu verschlüsseln: und
Bestimmen einer Hashing-Technik, die verwendet werden soll, um die verschiedenen Heatspots zu verschleiern, und Übertragen des verschlüsselten zufälligen Salt-Schlüssels und der bestimmten Hashing-Technik an die mobile Rechenvorrichtung jedes Benutzers der Vielzahl von verschiedenen Benutzern, wobei jede mobile Rechenvorrichtung ferner konfiguriert ist, die Hashing-Technik mit dem Salt-Schlüssel auf jeden Heatspot anzuwenden und einen Hash an den Computer zu übertragen.

7. Nicht flüchtiges computerlesbares Medium, umfassend Codeanweisungen, die, wenn sie von einem Prozessor eines Computers ausgeführt werden, ein Verfahren zum Bereitstellen eines standortbewussten Benutzermodells implementieren, das die Privatsphäre des Benutzers nach Anspruch 1 bewahrt.

8. Nichtflüchtiges computerlesbares Medium nach Anspruch 7, wobei der Prozessor beim Verarbeiten der gesammelten Sensordaten ferner jedem Heatspot mindestens einen Zeitstempel bereitstellt, der den Zeitpunkt angibt, zu dem jeder Benutzer den Heatspot erreicht hat.

## Revendications

1. Procédé pour fournir un modèle d'utilisateur sensible à l'emplacement protégeant la vie privée de l'utilisateur, le procédé comprenant
a) la collecte, par un module de capture de capteur, des données de capteur provenant d'une pluralité de capteurs installés sur un dispositif informatique mobile d'un utilisateur ;
b) le traitement, par un ordinateur, desdites données de capteur collectées de manière anonyme en regroupant les données de capteur collectées en différents points chauds, lesdits points chauds incluant différentes zones d'importance différente pour ledit utilisateur, et chacun des points chauds comprenant un rayon donné ;
c) l'étiquetage, par l'ordinateur, de chacun des points chauds avec un identifiant unique correspondant à une zone prédéterminée, et
d) la génération, par l'ordinateur, d'un modèle d'utilisateur sensible à l'emplacement en fonction desdits identifiants, de sorte que ledit modèle d'utilisateur sensible à l'emplacement généré soit approprié pour offrir des recommandations à l'utilisateur par l'intermédiaire du dispositif informatique mobile, pour effectuer des études et/ou fournir une entrée à d'autres modèles d'utilisateur,
dans lequel le procédé comprend en outre ;
effectuer les étapes a)-d) pour une pluralité d'utilisateurs différents actifs dans les mêmes points chauds, de telle sorte qu'un modèle d'utilisateur sensible à l'emplacement soit généré pour chacun de la pluralité d'utilisateurs différents :
le calcul, par l'ordinateur, d'un germe et l'utilisation dudit germe calculé pour créer et chiffrer automatiquement une clé de sel aléatoire ;
la détermination, par l'ordinateur, d'une technique de hachage à utiliser pour masquer les différents points chauds, et transmettre au dispositif informatique mobile de chaque utilisateur de ladite pluralité d'utilisateurs différents la clé de sel aléatoire chiffrée et la technique de hachage déterminée ; et
l'application, par chaque dispositif informatique mobile, de la technique de hachage avec la clé de sel à chaque point chaud et la transmission d'un hachage à l'ordinateur, et
dans lequel les données de capteur collectées incluent un ou plusieurs des éléments suivants : des données d'accéléromètre ; des données d'activité ; des données sur les applications installées dans le dispositif informatique : des données sur un niveau de batterie du dispositif informatique ; des données sur les balises Bluetooth dans le point chaud ; des journaux d'appels ; des données sur le dispositif informatique, incluant le modèle et/ou le nom de la marque ; des données indiquant si un casque d'écoute est branché ou non : des journaux Internet et/ou historique de navigation ; le niveau de luminosité actuel, des données de localisation, si de la musique est en train d'être jouée ou non, le niveau de bruit ambiant ; des données de podomètre : des données de réseau concernant le dispositif informatique incluant l'itinérance, l'opérateur, la tour de téléphonie cellulaire, des données de transmission/réception, mobile/Wi-Fi, le mode avion et/ou le pays ; des données sur les lieux ou le type d'établissements à proximité du point chaud ; des données indiquant si un écran du dispositif informatique est allumé/éteint ; des journaux SMS ; des données indiquant les transitions d'activité de l'utilisateur ; et/ou des données indiquant la dynamique de marche de l'utilisateur.

2. Procédé selon la revendication 1, dans lequel ladite étape b) comprend en outre la fourniture d'au moins un horodatage à chaque point chaud indiquant le moment temporel où l'utilisateur a atteint le point chaud.

3. Procédé selon les revendications précédentes, dans lequel chaque identifiant unique est chiffré en fonction d'au moins une partie des coordonnées de localisation de la zone prédéterminée.

4. Procédé selon les revendications précédentes, dans lequel les rayons des différents points chauds sont égaux ou différents entre eux.

5. Procédé selon les revendications précédentes, dans lequel le rayon des différents points chauds varie de quelques mètres à plusieurs kilomètres.

6. Système pour fournir un modèle d'utilisateur sensible à l'emplacement protégeant la vie privée de l'utilisateur, comprenant ;
une pluralité de dispositifs informatiques mobiles, chacun appartenant à un utilisateur d'une pluralité d'utilisateurs différents ;
un module de capture de capteur installé sur chaque dispositif informatique mobile de la pluralité de dispositifs informatiques mobiles pour collecter des données de capteur à partir d'une pluralité de capteurs installés sur chaque dispositif informatique mobile, des données de capteur collectées incluant un ou plusieurs des éléments suivants : des données d'accéléromètre ; des données d'activité ; des données sur les applications installées dans le dispositif informatique ; des données sur un niveau de batterie du dispositif informatique ; des données sur les balises Bluetooth dans le point chaud ; des journaux d'appels ; des données sur le dispositif informatique, incluant le modèle et/ou le nom de la marque ; des données indiquant si un casque d'écoute est branché ou non ; des journaux Internet et/ou historique de navigation, le niveau de luminosité actuel ; des données de localisation ; si de la musique est en train d'être jouée ou non ; le niveau de bruit ambiant ; des données de podomètre ; des données de réseau concernant le dispositif informatique incluant l'itinérance, l'opérateur, la tour de téléphonie cellulaire, des données de transmission/réception, mobile/Wi-Fi, le mode avion et/ou le pays ; des données sur les lieux ou le type d'établissements à proximité du point chaud ; des données indiquant si un écran du dispositif informatique est allumé/éteint ; des journaux SMS ; des données indiquant les transitions d'activité de l'utilisateur ; et/ou des données indiquant la dynamique de marche de l'utilisateur ;
un ordinateur incluant un ou plusieurs processeurs et au moins une mémoire, dans lequel l'un ou plusieurs processeurs sont configurés pour :
traiter les données de capteur collectées de chaque utilisateur de la pluralité d'utilisateurs différents de manière anonyme en regroupant les données de capteur collectées en différents points chauds, lesdits points chauds incluant différentes zones d'importance différente pour l'utilisateur, et chacun des points chauds comprenant un rayon donné :
étiqueter chaque point chaud avec un identifiant unique correspondant à une zone prédéterminée ;
générer un modèle d'utilisateur sensible à l'emplacement pour chaque utilisateur en fonction desdits identifiants, de sorte que ledit modèle d'utilisateur sensible à l'emplacement généré soit approprié pour offrir des recommandations à l'utilisateur par l'intermédiaire du dispositif informatique mobile, effectuer des études et/ou fournir une entré à d'autres modèles d'utilisateur :
calculer une graine et utiliser la graine pour créer et chiffrer automatiquement une clé de sel aléatoire : et
déterminer une technique de hachage à utiliser pour masquer les différents points chauds, et transmettre au dispositif informatique mobile de chaque utilisateur de la pluralité d'utilisateurs différents la clé de sel aléatoire chiffrée et la technique de hachage déterminée, dans lequel chaque dispositif informatique mobile est en outre configuré pour appliquer la technique de hachage avec la clé de sel à chaque point chaud et pour transmettre un hachage à l'ordinateur.

7. Support lisible par ordinateur non transitoire, comprenant des instructions de code qui, lorsqu'elles sont exécutées par un processeur d'un ordinateur, mettent en œuvre un procédé pour fournir un modèle d'utilisateur sensible à l'emplacement protégeant la vie privée de l'utilisateur selon la revendication 1.

8. Support lisible par ordinateur non-transitoire selon la revendication 7, dans lequel le processeur, lors du traitement des données de capteur collectées, fournit en outre au moins un horodatage à chaque point chaud indiquant le moment temporel où chaque utilisateur a atteint le point chaud.
